# EUROPEAN PATENT SPECIFICATION

(11) **EP 2 689 188 B1**
(45) Date of publication and mention of the grant of the patent: **13.01.2016**
(21) Application number: 12710986.6
(22) Date of filing: 01.03.2012
(51) Int. Cl.: F23G 5/20

(54) **IMPROVEMENTS IN WASTE PROCESSING**
VERBESSERTE ABFALLVERARBEITUNG
AMÉLIORATIONS APPORTÉES AU TRAITEMENT DES DÉCHETS

(30) Priority: 19.03.2011 GB 201104676
(43) Date of publication of application: 29.01.2014
(73) Proprietor: Chinook End-Stage Recycling Limited, Nottingham, Nottinghamshire NG7 2RU (GB)
(72) Inventor: Chalabi, Rifat Al, Nottingham, Nottinghamshire NG7 2RU (GB); PERRY, Ophneil Henry, Nottingham, Nottinghamshire NG7 2RU (GB); TURNER, John, Nottingham, Nottinghamshire NG7 2RU (GB)
(74) Representative: Ward, David Ian
(86) International application number: PCT/GB2012/000198
(87) International publication number: WO 2012/127182

(56) References cited:
- WO-A1-2004/059229
- GB-A- 1 385 856
- US-A- 3 682 117
- US-A- 3 916 806
- US-A- 4 189 300

## Description

The present invention relates to improvements in the processing of materials having an organic component. In particular the method relates to improvements in the processing of such materials in rotating ovens.

The use of large rotating ovens for processing waste is known in the prior art. Examples of rotating ovens for such use can be found, for example, in PCT publication WO2004/059229. This document discloses a rotating oven for processing waste which has a plurality of nozzles for emitting heated gas into the processing chamber thereof. Although only a single row of inlets is shown in this prior art document, in practice an array of inlets covering the sides of the processing chamber, or at least one side thereof, can be provided.

Document US 3916806 discloses a rotating oven according to the preamble of independent claims 1 and 12.

As the oven rotates scrap material therein will fall over the inlets temporarily blocking them and reducing the gas flow therethrough. In reality when operating such a system as the material moves in the processing chamber as the oven is rotated it tends to move from one side to the other of the oven substantially as a single bulk movement i.e. once the stiction between the material to be processed and the surface it is resting on is overcome by the angle of the up and reaching a particular degree the entire mass of material will slide down that side of the oven and then substantially stop until the oven is further rotated so that the material once again overcomes its stiction. This is especially the case in processing chambers having at least one flat side as opposed to circular or tubular ovens. In circular or tubular ovens a constant tumbling of the material is achieved whereas in a flat sided oven the bulk movement of the mass of material as described above occurs. This can be disadvantageous in the speedy processing of waste material as while the material is substantially bunched together only the top and bottom surfaces of the material are exposed to the hot gasses and therefore become heated to react and release gas.

A further problem of the mass movement of material in this way is that, as the material is often quite dense it will tend to block the flow coming out of the nozzles beneath where it is resting. This results in more of the flow entering the processing chamber from nozzles which are not in direct contact with the material to be processed. This is also disadvantageous as the quickest way to transfer heat from the hot gasses into the materials that are being processed is for the hot exhaust gasses to be injected directly into the materials.

A further problem with existing rotating ovens, such as that found in the prior art, is that when an array of gas outlets is provided around the different sides of the oven and, as described above, the quickest way to transfer heat into the material is to directly inject gas into that material, as the material is located on the lower side of the processing chamber, due to gravity, only a small proportion of the inlet nozzles are capable of directly injecting hot gasses into the material being processed. That is, if as described above, the gas flow from these nozzles has not been prevented by the mass of material sitting on top of them.

As described in the prior art, the processing chamber can be a double-walled chamber that has hot gasses passing between an inner and outer wall thereof so as to heat the inner wall. As the materials that are being processed come into contact with this inner wall, then heat is transferred from the exhaust gasses circulating between the two walls into the material by its contact with the hot inner wall. Further, as described above, as the material within the oven tends to move as a single mass, only a small part of the inner wall is in contact with the waste material at any one time, thereby reducing heat transfer efficiency into displaced material.

It is the purpose of the present invention to provide an improved apparatus and method for processing waste that at least partially mitigates some of the above-mentioned problems.

According to the invention there is provided an apparatus for processing material such as organically coated waste and organic materials according to claim 1:

Preferably the oven has at least one substantially flat side and the retaining means are provided on the flat side of the oven.

The exact reaction causing the breakdown of the organic material within the processing chamber will depend upon the processing chamber conditions. If there is zero or substantially zero oxygen present in the processing chamber, then the reaction will be predominantly a pyrolysis reaction. Where there is some oxygen present, there will be a gassification which will include some oxidation. In either reaction a gas will be produced that can be used as described in the prior art.

The retarder means to slow the movement of waste material as the oven rotates. Without the retarder means of the invention, an oven having a substantially flat side would rotate until such point that the gravitational forces on the waste material therein overcame the stiction forces resisting movement of that material. Once the stiction forces are overcome then, without the retarder means, the material would move substantially as one solid mass from its current position to a new position substantially at the lowest point of the chamber, sliding across the substantially flat surface. The retarder means slow the movement of the waste material as the oven rotates so that it does not have the same sudden movement as one single mass from one place to another within the chamber but instead moves more gradually. This more gradual movement extends the time period for which the waste material is in contact with the sides of the processing chamber as it passes thereover and increases the surface area of the material being processed. By increasing the surface area of the material being processed, greater heat exchange can take place between the hot gasses and the material.

In a preferred embodiment, the retarder means can be moved between an active position in which they protrude into the treatment chamber and an inactive position wherein they protrude into the treatment chamber by a lesser amount. In their inactive position the retarders may be substantially flush with the walls of the treatment chamber.

The apparatus preferably has an array of retarder means spread about a surface thereof. The retarder means can be moved between their active position and their inactive position to retard the movement of the material within the processing chamber by different amounts as the chamber rotates. By, for example, activating the retarder means in a rippled effect which may be slowly released from this current position to slide down the chamber walls to a new position at the lower-most point of the chamber. By allowing a gradual movement of the material maximum heat exchange into that material can be achieved.

In one preferred embodiment the retarder means are made of spring steel and the retarder means resiliently deform when the retarder means move from its active position to its inactive position. The retarder means may extend through the walls of the treatment chamber and may further comprise actuator means located outside the treatment chamber for actuating the retarder means. This enables the actuators to be maintained in a lower temperature environment whilst still being able to move the retarder means from the active position to the inactive position. The actuator means may, for example, be magnetically driven actuators. In one preferred embodiment the retarder means may comprise a flow path therethrough to enable hot gasses to be introduced into the treatment chamber through the retarder means. In this way, as the retarder means extend from the walls of the chamber, the gas left in the retarder means can be deposited directly into the material being treated as opposed to the prior art systems which only allow heat to be input into the surfaces of the mass of waste being processed.

The treatment chamber may preferably have a double wall, comprising an inner wall and an outer wall extending along at least one of its side and its retarder means may extend through both the inner and the outer walls. In this manner hot gasses can flow between the inner and outer wall thereby heating the surfaces of the treatment chamber. In addition hot gasses can pass through inlets into the interior of the processing chamber and/or alternatively heated gasses can be passed through the flow paths in the retarder means so as to be deposited into the material within the processing chamber. According to the invention the retarder means each comprise a plurality of inverted hooks arranged in a radial way about a common central axis with the ends of the hooks based from the common central axis. In this way the retarder may resemble palm trees or the framework of an umbrella. The retarder means, in particular the inverted hooks, may each comprise a hollow tube through which hot gas can pass into the treatment chamber preferably with the ends of the inverted hooks are bent so that hot gas emitting from them is directed away from the surface of the treatment chamber. In this way the gas emitting from the ends of the hook shaped retarder means is directed upwards into the mass of waste within the processing chamber. In a preferred embodiment the retarder means can be rotated.

In one embodiment the retarder means may comprise a shaft and a retarder head. The shaft can be pivotally connected to the retarder head. In this manner when the retarder is in its activated position, the head of the retarder can rotate under the influence of gravity as the oven as a whole is rotated. According to a second aspect of the inventions there is provided a method of processed material such as organically coated waste and organic material according to claim 12.

As discussed above by retarding the movement of waste material in the processing chamber in this way a greater surface area to volume ratio of waste product is exposed to the hot gasses and the heated sides of the waste processing chamber.

Preferably the method further comprises agitating the material in the processing chamber by moving the retarder means between an active position, in which they protrude into the treatment chamber, and an inactive position in which they protrude into the treatment chamber by a lesser amount. Preferably the retarder means are repeatedly moved between their active position and their inactive position. This agitation of the material being processed lifts it from the surface on which it is sitting and, by agitating it, provides a constant gas path therethrough so that gas emitted from outlets in the side wall of the processing chamber on which the waste material is sitting can omit from those outlets and pass into, and through, the agitated waste material by agitating the waste material in this way a constant flow of gas is maintained through the gas outlets, even when a relatively large mass of material being processed being present in the processing chamber and located on top of those outlets.

Preferably hot gases may also be passed through flow paths in the retarder means, thereby directly delivering hot gas into the centre of the material being processed.

The method may further comprise rotating one or more of the retarder means. The introduction of hot gas directly into the centre of the waste being processed, together with the retarded movement of the waste material as the oven is rotated results in a far quicker heat transfer into the material being processed.

Method preferably further comprises moving to, and retaining in, the inactive position at least some of the retarder means while they are covered with material being processed. This is particularly advantageous with retainer means such as the inverted hook type described herein. As the retarder means are moved from their active position to their inactive position while covered with the material being processed some of the material being processed will be trapped underneath the retarder means and retained in place against the hot surfaces of the oven as the oven rotates. This again assists in rapid heat transfer into the materials as some of the material is retained against hot surfaces of the oven whereas otherwise would fall therefrom by gravity.

Specific embodiments of the invention will now be described, by way of example only, with the reference to the accompanying drawings in which:
Figure 1 shows a rotating oven of the invention;
Figure 2 shows a partially cut away chamber of the oven of the invention;
Figure 3 shows a isometric view of the details of retarder means in a processing chamber of the present invention.
Figures 4 and 5 show the movement of the retarder means between its active and its inactive position.
Figure 6 shows a further embodiment of the present invention; and
Figures 7 and 8 show diagrammatic views of the movement of material being processed within the oven as it moves both with and without retarder means being provided.

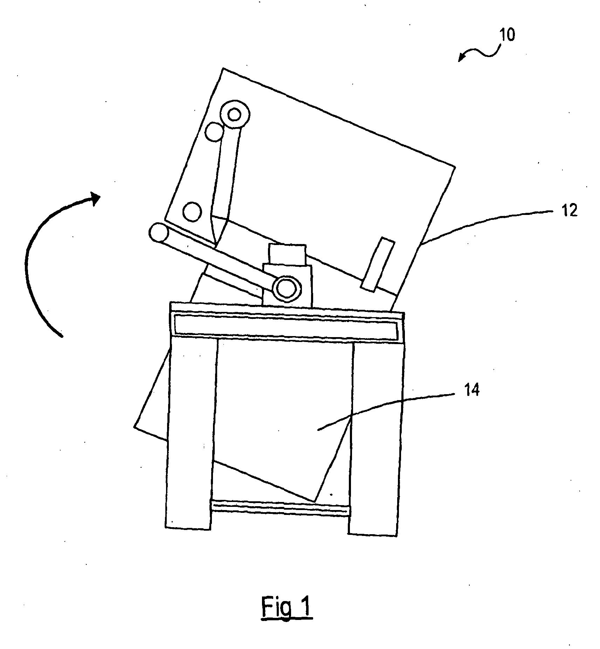

Referring to Figure 1 a rotating oven is shown. The oven 10 comprises a processing chamber 12 and a charging box 14 attached to the processing chamber that allows the waste to be added to and removed from the oven. The principle fundamentals of the way in which this oven works can be found in prior art document WO 2004/059229. Waste material to be processed is loaded into the charging box which is then attached to the oven. The oven is rotated as the material therein is heated to cause it to break down. The material may be heated in a zero or substantially zero % oxygen environment so that is pyrolyses therein to create gas.

Although the prior art is described as having an integral afterburner to combust the gasses being produced it would be appreciated that this afterburner may be separated from the oven and connected thereto by a conduit. It will be appreciated by the skilled person that the afterburner can either act to burn the gasses produced in the chamber to produce heat that may be usable, for example, for driving a boiler. Alternatively, the afterburner could be provided with a source of fuel and a source of oxygen to burn the fuel so that the gas in the vicinity of the afterburner that has originated from the processing chamber is heated to a high temperature so as to destroy any therein but is not in fact combusted. In this way a clean fuel gas can be produced which can be, for example, combusted in a gas turbine. Various modifications to the process parameters to achieve slightly different results depending upon the exact material being processed will be apparent to the skilled person.

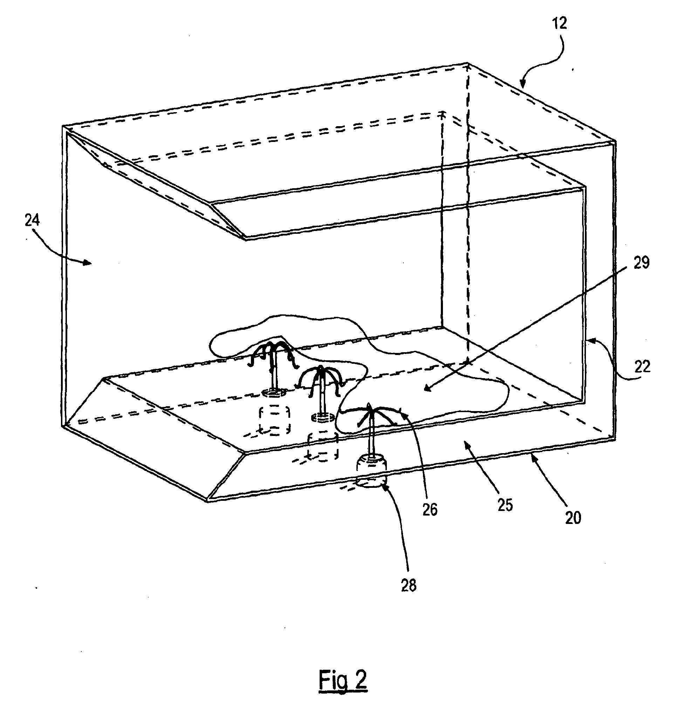

Referring to Figure 2 a partial section through a processing chamber of the oven is shown. The processing chamber has a double walled construction having an outer wall 20 and an inner wall 22. The processing chamber has an open end 24 through which material may enter the processing chamber from the charging box (see figure 1). A plurality of retarder means 26 extends from an actuator 28 located outside the processing chamber, through the space 25 between the outer wall 20 and the inner wall 22, and protrude into the processing chamber. Although only three such retarder means are shown for clarity in reality a large number of retainer means may be used. In particular an XY array of retainer means and the retainer means may be provided on more than one side of the processing chamber. As the processing chamber is rotated the retarder means 26 slow the movement of the material 29 being processed thereby increasing its exposure to heat.

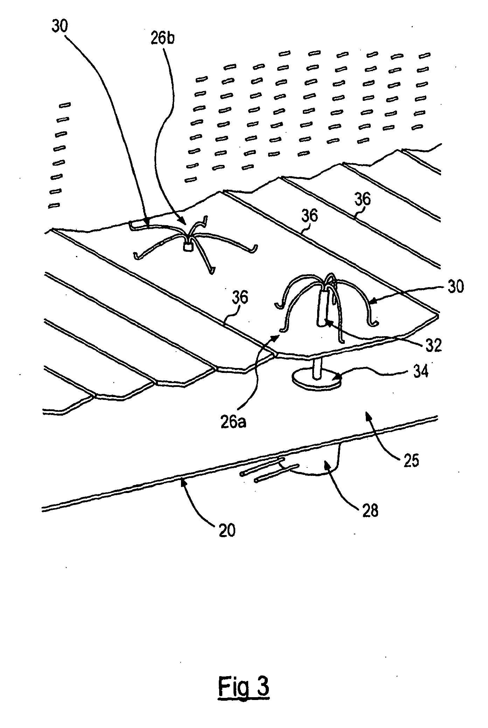

Referring to Figure 3 more detail of the retarder means is shown. Each retarder means comprises a plurality of inverted hook elements 30 positioned in a circular array around a common central axis. The central axis forms a shaft 32 that passes through the inner wall 22 to a magnetically repelled plate 34 at the end of the shaft 32 which in turn is activated by an actuator 28 located outside the processing chamber. The actuator 28 is preferably of the magnetic type such that when energised the shaft 32 of the retainer means which is at least in part made from a porous material, will be pulled down into the actuator thereby moving the retarder means from its active position 26a to its inactive position 26b as depicted in figure 3. The inner wall 22 has clearance holds that allow the shaft 32 of the retarder means to pass there through and guide the shaft loosely as it travels between its active and inactive positions. The holes in the inner wall do not have to be gas tight as it is not problematic if a small amount of gas leaks through these holes. The inner wall 22 has a plurality of gas inlets 36 that allow hot gasses passing between the outer wall 20 and the inner wall 22 to pass therethrough into the processing chamber so as to come into direct contact with the material therein. The passage of the hot gas in the gap between the outer wall 20 and the inner wall 22 heats the inner wall 22 so that any material to be processed that is in contact with the inner wall is heated by means of conduction by the inner wall 22.

The actuator 28 may also be configured to rotate the retarder means 26 so as to agitate the material in the oven.

The inverted hooks of the retarder means 26 may be manufactured from any suitable material that is resistant to heat and which has the necessary resilience to allow it to deflect as it moves between its active position 26a and its inactive position 26b when the actuator 28 is activated the shaft of the retarder means is pulled into the actuator and the inverted hooks of the retarder means are pulled flat against the inner wall of the processing chamber. The retarder means can move from its inactive position to its active position by one of two means. Either the actuator 28 can be a push pull actuator and can directly move the retarder means from its inactive position 26b to its active position 26a or, alternatively, the resilience of the inverted hooks of the retarder means can use their natural spring force to return to their natural position thereby moving the retarder to its active position.

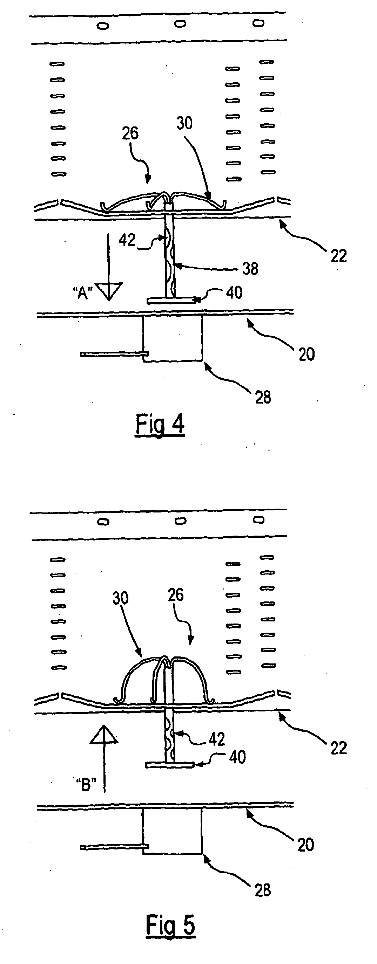

Figures 4 and 5 show an alternative arrangement of retarder means wherein the shaft 38 of the retarder means does not extend through a seal in the outer wall of the processing chamber. In the example shown in figures 4 and 5 the shaft 38 terminates in a plate 40 within the space between the outer wall 20 and the inner wall 22. In this arrangement the actuator 28 is a strong electromagnet and the plate 40 and/or shaft 38 are ferrous. Activation of the electromagnet 28 pulls the plate 40 in the direction of arrow A thereby moving the retarder means 26 to its inactive position. When the electromagnet 28 is deactivated the natural resilience of the retarder means 26 moves it in the direction of arrow b into its active position. The inverter hooks 30 of the retarder means may comprise hollow tubes and the retarder means 26 may have a gas inlet 42 on the shaft 38 that extends between the outer wall 20 and the inner wall 22. Gas flowing between the two walls can therefore enter the shaft 38, pass through the inverted hooks of the retarder means 26 and exit from the ends thereof into the processing chamber.

As can be seen from the Figures the ends of the inverted hooks 30 of the retarder means are bent up so that their end is facing away from the inner wall 22 of the processing chamber ensuring that gas can pass into the material sat on top of the retarder means and not into the inner wall 22.

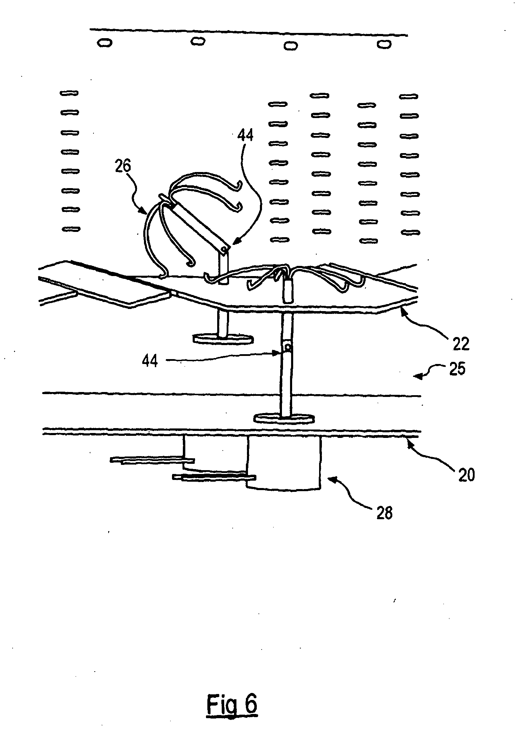

Referring now to Figure 6 an embodiment is shown wherein the retarders 26 have a hinge joint 44 that is in the processing chamber when the retarder is in its active position and which is in the space 25 between the inner wall 22 and the outer wall 20 when inactive. In this way, as the retarder 26 is raised into its active position, the tips of the retarder 26 bend at its hinge 44 and the plurality of hook elements expose themselves to a grater surface area of the moving material within the chamber thereby increasing the retarding effect of the movement thereof. Activation of the electromagnet 28creates a force on the plate 40 and moves the actuator to its inactive position. As the hinge 44 passes through the inner wall 22 it will re-orientate the retarder 26 in its original position. By hinging the retarders their inverted hooks act to catch some of the material as it tumbles and this assists in retaining the material in contact with the largest surface area of the chamber walls.

In one mode of operation, when the retarder means are covered with material that has been processed they may be moved between there active and inactive positions so as to agitate the material being processed.

In use the retarders can be moved between their active and inactive positions as the oven rotates. It will be appreciated that the sequencing of the retarders can be varied depending on the exact material being processed. However, the purpose remains the same, that is to maximise the exposure of the waste material to the incoming hot gasses and the sides of the processing chamber that become heated by the passage of the gasses thereover.

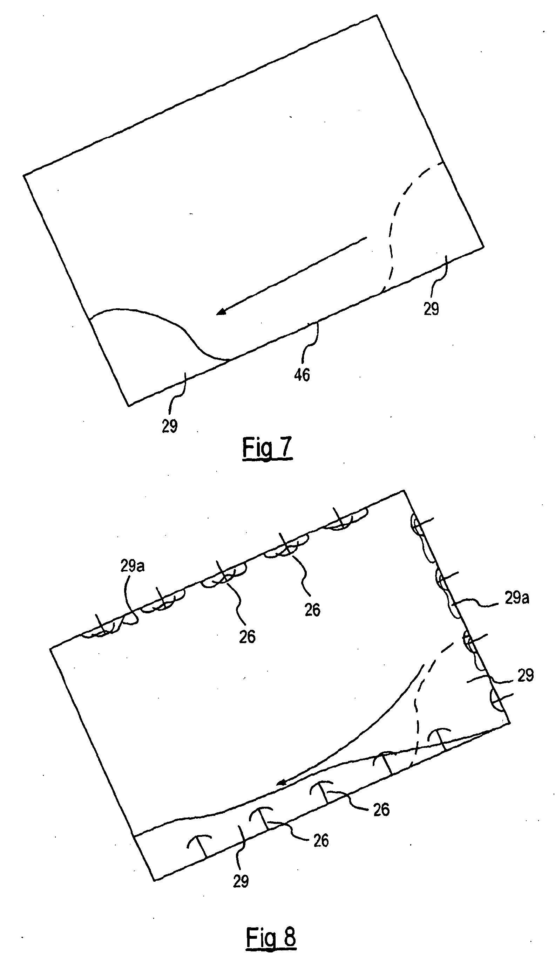

Referring to Figure 7, generally, when an oven of the prior art rotates the material therein tends to move as a single mass as the oven rotates, that is, as the oven rotates the material does not initially move due to static friction between the material and the side of the chamber. Once the rotation reaches a certain level the static friction is overcome and, as the kinetic friction is less than the static friction the material moves across the surface of the chamber (as depicted by the arrow) as a single mass from a first position depicted by the dashed line to a second position depicted by the solid line. By moving in this way the lump of material 29 has a low surface area in contact with the walls of the chamber and there will be a large area of heated chamber wall 46 that is not in contact with the material in either position. This increases the time taken to get heat into the material and thereby increases its processing time.

Referring to Figure 8, by using the present invention, when the gravitational pull on the material is sufficient to overcome the static friction it starts to move across the surface of the chamber. However, the retarders 26, which are in their active extended position on the surface the material is moving across slow the movement, and separate the material as it moves so that it does not all move as one mass. This has two effects. Firstly the surface area/volume ratio of the material is increased and secondly a larger amount of that area is in contact with the heated walls of the treatment chamber.

While the material is spread about the face of the treatment chamber the retarders can be retracted into their inactive position. Retracting the retarders in this way will trap a certain amount of the material being processed between the retarders and the chamber walls, thereby preventing all the material falling to the lowest point of the rotating chamber. As the chamber continues to rotate this material 29a will be held against the wall of the chamber and, as the walls of the chamber are heated will continue to have a large surface area available to absorb heat therefrom, even on the sides of the chamber with which the majority of the material has contact.

Some materials being processed may be quite dense and their mass may be sufficient to block or partially block the flow of hot gasses into the treatment chamber from the nozzles. The retarders can, in this case, be moved between their active and their inactive positions. Moving them in this manner will move the material covering the jets and enable hot gasses from the jets to better permeate into the material. As discussed above the retarders themselves may also have hot gas passages therethrough to disperse hot gas into the material as they move.

## Claims

1. Apparatus for processing material such as organically coated waste and organic materials including biomass, industrial waste, municipal solid waste and sludge; the apparatus comprising:
an oven (10) having a rotatable portion comprising a treatment chamber 12 adapted to receive material for treatment;
a plurality of gas inlets (36) in at least one wall of the treatment chamber 12 through which hot gases are introduced to the treatment chamber to heat the material therein so as to cause the organic components thereof to pyrolyse or gasify; and
at least one retarder means (26) located in the treatment chamber to retard the movement of waste material therein as the oven (10) rotates, **characterised in that** each retarder means comprises a plurality of inverted hooks (30) arranged in a radial array about a common central axis with the ends of the hooks spaced from the common central axis.

2. An apparatus according to claim 1 wherein the oven (10) has at least one substantially flat side and the retarder means (26) are provided on the flat side of the oven (10).

3. An apparatus according to claim 1 or claims 2 wherein the retarder means (26) can be moved between an active position in which they protrude into the treatment chamber (12) by a first distance and an inactive position wherein they protrude into the treatment chamber (12) by a second distance, the first distance being greater than the second distance and optionally wherein in the inactive position the retarders (26) are substantially flush with the walls of the treatment chamber (12).

4. An apparatus according to claim 3 wherein the retarder means (26) are made of spring steel and wherein the retarder means (26) resiliently deforms when the retarder means (26) is moved from its active position to its inactive position.

5. An apparatus according claim 3 or 4 wherein the retarder means (26) extend through the walls (20, 22) of the treatment chamber (12) and further comprise actuator means (28) located outside the treatment chamber (12) for actuating the retarder means (26).

6. An apparatus according to any previous claim wherein the treatment chamber (12) has a double wall, comprising an inner wall (22) and an outer wall (20), extending along at least one of its sides and wherein the retarder means (26) extend through both the inner and the outer wall (22, 20).

7. An apparatus according to any previous claim wherein the retarder means (26) further comprise a flow path therethrough and hot gases are introduced into the treatment chamber (12) through the retarder means (26) and optionally wherein the flow path has at least one flow path inlet in a section thereof extending between the inner and outer walls (22, 20), and at least one outlet in a section thereof extending into the treatment chamber.

8. An apparatus according to any previous claim wherein the retarder means (26) each comprise at least one hollow tube through which hot gas can pass into the treatment chamber.

9. An apparatus according to any previous claim wherein the retarder means (26) can be rotated.

10. An apparatus according to claim 8 wherein the ends of the inverted hooks (30) are bent in a direction towards said treatment chamber (12) so that, in use, hot gas emitting from them is directed away from the surface of the treatment chamber (12).

11. An apparatus according to any previous claim wherein the retarder means (26) comprises a shaft (32) and a retarder head, and wherein the shaft (32) is pivotally connected to the retarder head.

12. A method of processing material such as organically coated waste and organic materials including: biomass, industrial waste, municipal solid waste and sludge; the method comprising:
placing material to be treated in an oven (10) having a rotatable portion comprising a treatment chamber;
heating the material in the treatment chamber (12) by introducing hot gases thereinto via gas inlets in at least one wall of the treatment chamber;
rotating the oven (10) so as to cause the material therein to tumble; and
retarding the movement of the material in the processing chamber by placing retarder means (26) comprising a plurality of inverted hooks arranged in a radial array about a common central axis with the ends of the hooks spaced from the common central axis in the movement path of the waste material.

13. The method according to claim 12 further comprising agitating said material in the processing chamber (12) by moving the retarder means (26) from an active position (26a) in which they protrude into the treatment chamber to an inactive position (26b) wherein they protrude into the treatment chamber by a lesser amount, said agitating optionally comprising repeatedly moving the retarder means (26) between their active position and their inactive position (26a, 26b).

14. The method according to claim 12 or 13 further comprising introducing hot gases into the treatment chamber (12) by passing the hot gases through a flow path in the retarder means (26).

15. The method according to any one of claims 12 to 14 further comprising agitating said material in the processing chamber (12) by rotating the retarder means (26).

16. The method according to any one of claims 12 to 15 further comprising moving to and retaining in their inactive position at least some of the retarder means (26) while they are covered with material being processed so as to trap at least some of the material against the wall of the treatment chamber (12) and optionally continuing to rotate the oven (10) while retaining said at least some of the retarder means (26) in their inactive position so as to retain said trapped material adjacent to the sides of the treatment chamber (12) as the oven (10) rotates.

17. The method according to claim 12 comprising selectively retarding the movement of material within the treatment chamber (12) as the chamber rotates so as to provide a greater contact area between the chamber walls and the material.

## Patentansprüche

1. Vorrichtung zur Verarbeitung von Material, wie beispielsweise organisch beschichtetem Abfall und organischen Materialien, einschließlich Biomasse, Industrieabfall, Siedlungsabfälle und Schlamm; wobei die Vorrichtung aufweist:
einen Ofen (10) mit einem drehbaren Abschnitt, der eine Behandlungskammer (12) aufweist, die ausgebildet ist, um Material für eine Behandlung aufzunehmen;
eine Vielzahl von Gaseintrittsöffnungen (36) in mindestens einer Wand der Behandlungskammer (12), durch die heiße Gase in die Behandlungskammer eingefühlt werden, um das Material darin zu erhitzen, um so zu bewirken, dass dessen organische Komponenten pyrolysieren oder vergasen; und
mindestens ein Verzögerungsmittel (26), das in der Behandlungskammer angeordnet ist, um die Bewegung des Abfallmaterials darin zu verzögern, während sich der Ofen (10) dreht, **dadurch gekennzeichnet, dass** jedes Verzögerungsmittel eine Vielzahl von umgekehrten Haken (30) aufweist, die in einer radialen Anordnung um eine gemeinsame mittlere Achse angeordnet sind, wobei die Enden der Haken von der gemeinsamen mittleren Achse beabstandet sind.

2. Vorrichtung nach Anspruch 1, bei der ein Ofen (10) mindestens eine im Wesentlichen flache Seite aufweist und die Verzögerungsmittel (26) auf der flachen Seite des Ofens (10) vorhanden sind.

3. Vorrichtung nach Anspruch 1 oder Anspruch 2, bei der die Verzögerungsmittel (26) zwischen einer aktiven Position, in der sie in die Behandlungskammer (12) um einen ersten Abstand hinein vorstehen, und einer inaktiven Position bewegt werden können, in der sie in die Behandlungskammer (12) um einen zweiten Abstand hinein vorstehen, wobei der erste Abstand größer ist als der zweite Abstand, und wobei wahlweise die Verzögerungsmittel (26) in der inaktiven Position im Wesentlichen bündig mit den Wänden der Behandlungskammer (12) sind.

4. Vorrichtung nach Anspruch 3, bei der die Verzögerungsmittel (26) aus Federstahl bestehen, und wobei sich die Verzögerungsmittel (26) elastisch verformen, wenn die Verzögerungsmittel (26) aus ihrer aktiven Position in ihre inaktive Position bewegt werden.

5. Vorrichtung nach Anspruch 3 oder Anspruch 4, bei der sich die Verzögerungsmittel (26) durch die Wände (20, 22) der Behandlungskammer (12) erstrecken und außerdem ein Betätigungsmittel (28) aufweisen, das außerhalb der Behandlungskammer (12) für das Betätigen der Verzögerungsmittel (26) angeordnet ist.

6. Vorrichtung nach einem der vorhergehenden Ansprüche, bei der die Behandlungskammer (12) eine Doppelwand aufweist, die eine innere Wand (22) und eine äußere Wand (20) aufweist, die sich entlang mindestens einer ihrer Seiten erstrecken, und wobei sich die Verzögerungsmittel (26) durch sowohl die innere als auch die äußere Wand (22, 20) erstrecken.

7. Vorrichtung nach einem der vorhergehenden Ansprüche, bei der die Verzögerungsmittel (26) außerdem einen Strömungsweg dort hindurch aufweisen und heiße Gas in die Behandlungskammer (12) durch die Verzögerungsmittel (26) eingerührt werden, und wobei wahlweise der Strömungsweg mindestens einen Strömungswegeingang in einem Abschnitt davon, der sich zwischen der inneren und der äußeren Wand (22, 20) erstreckt, und mindestens einen Ausgang in einem Abschnitt davon aufweist, der sich in die Behandlungskammer hinein erstreckt.

8. Vorrichtung nach einem der vorhergehenden Ansprüche, bei der die Verzögerungsmittel (26) jeweils mindestens ein hohles Rohr aufweisen, durch das das heiße Gas in die Behandlungskammer gelangen kann.

9. Vorrichtung nach einem der vorhergehenden Ansprüche, bei der die Verzögerungsmittel (26) gedreht werden können.

10. Vorrichtung nach Anspruch 8, bei der die Enden der umgekehrten Haken (30) in einer Richtung zur Behandlungskammer (12) hin gebogen sind, so dass bei Benutzung das heiße Gas, das aus ihnen austritt, weg von der Oberfläche der Behandlungskammer (12) gelenkt wird.

11. Vorrichtung nach einem der vorhergehenden Ansprüche, bei der die Verzögerungsmittel (26) einen Schaft (32) und einen Verzögerungsmittelkopf aufweisen, und wobei der Schaft (32) drehbar mit dem Verzögerungsmittelkopf verbunden ist.

12. Verfahren zur Verarbeitung von Material, wie beispielsweise organisch beschichtetem Abfall und organischen Materialien, einschließlich Biomasse, Industrieabfall, Siedlungsabfälle und Schlamm; wobei das Verfahren die folgenden Schritte aufweist:
Anordnen des zu behandelnden Materials in einem Ofen (10) mit einem drehbaren Abschnitt, der eine Behandlungskammer aufweist;
Erhitzen des Materials in der Behandlungskammer (12) durch Einführen von heißen Gasen in diese mittels der Gaseintrittsöffnungen in mindestens einer Wand der Behandlungskammer;
Drehen des Ofens (10), um so zu bewirken, dass das Material darin hin und her gewälzt wird; und
Verzögern der Bewegung des Materials in der Verarbeitungskammer durch Anordnen von Verzögerungsmitteln (26), die eine Vielzahl von umgekehrten Haken aufweisen, die in einer radialen Anordnung um eine gemeinsame mittlere Achse angeordnet sind, wobei die Enden der Haken von der gemeinsamen mittleren Achse im Bewegungsweg des Abfallmaterials beabstandet sind.

13. Verfahren nach Anspruch 12, das außerdem den Schritt des Aufrührens des Materials in der Verarbeitungskammer (12) aufweist, indem die Verzögerungsmittel (26) aus einer aktiven Position (26a), in der sie in die Behandlungskammer hinein vorstehen, in eine inaktive Position (26b) bewegt werden, in der sie in die Behandlungskammer in einem geringeren Maß hinein vorstehen, wobei das Aufrühren wahlweise das wiederholte Bewegen der Verzögerungsmittel (26) zwischen ihrer aktiven Position und ihrer inaktiven Position (26a, 26b) aufweist.

14. Verfahren nach Anspruch 12 oder Anspruch 13, das außerdem den Schritt des Einführens von heißen Gasen in die Behandlungskammer (12) aufweist, indem die heißen Gase einen Strömungsweg in den Verzögerungsmitteln (26) passieren.

15. Verfahren nach einem der Ansprüche 12 bis 14, das außerdem den Schritt des Aufrührens des Materials in der Verarbeitungskammer (12) aufweist, indem die Verzögerungsmittel (26) gedreht werden.

16. Verfahren nach einem der Ansprüche 12 bis 15, das außerdem die folgenden Schritte aufweist: Bewegens von mindestens einigen der Verzögerungsmittel (26) in ihre inaktive Position und das Halten in dieser, während sie mit dem zu verarbeitenden Material bedeckt werden, um so mindestens einiges vom Material an der Wand der Behandlungskammer (12) einzuschließen; und das wahlweise Fortsetzen des Drehens des Ofens (10) während mindestens einige der Verzögerungsmittel (26) in ihrer inaktiven Position gehalten werden, um so das eingeschlossene Material angrenzend an den Seiten der Behandlungskammer (12) zu halten, während sich der Ofen (10) dreht.

17. Verfahren nach Anspruch 12, das den Schritt des selektiven Verzögerns der Bewegung des Materials innerhalb der Behandlungskammer (12) aufweist, während sich die Kammer dreht, um so eine größere Kontaktfläche zwischen den Kammerwänden und dem Material zu bewirken.

## Revendications

1. Appareil pour le traitement de matériau, par exemple des déchets à revêtement organique, et des matériaux organiques englobant de la biomasse, des déchets industriels, des déchets municipaux solides et des boues ; l'appareil comprenant :
un four (10), comportant une partie rotative comprenant une chambre de traitement (12) adaptée pour recevoir le matériau destiné au traitement ;
plusieurs entrées de gaz (36) dans au moins une paroi de la chambre de traitement (12), à travers lesquelles des gaz chauds sont introduits dans la chambre de traitement, pour chauffer le matériau qui y est contenu, de sorte à entraîner une pyrolyse ou une gazéification des composants organiques ; et
au moins un moyen retardateur (26), agencé dans la chambre de traitement pour retarder le déplacement des déchets qui y sont contus lors de la rotation du four (10), **caractérisé en ce que** chaque moyen retardateur comprend plusieurs crochets inversés (30) agencés dans un réseau radial autour d'un axe central commun, les extrémités des crochets étant espacées de l'axe central commun.

2. Appareil selon la revendication 1, dans lequel le four (10) comporte au moins un côté essentiellement plat, les moyens retardateurs (26) étant agencés sur le côté plat du four (10).

3. Appareil selon les revendications 1 ou 2, dans lequel les moyens retardateurs (26) peuvent être déplacés entre une position active, dans laquelle ils débordent dans le chambre de traitement (12) d'une première distance, et une position inactive, dans laquelle ils débordent dans la chambre de traitement (12) d'une deuxième distance, la première distance étant supérieure à la deuxième distance, et dans lequel, dans la position inactive, les retardateurs (26) affleurent optionnellement les parois de la chambre de traitement (12).

4. Appareil selon la revendication 3, dans lequel les moyens retardateurs (26) sont composés d'acier à ressorts, et dans lequel les moyens retardateurs (26) sont déformés élastiquement lors du déplacement des moyens retardateurs (26) de leur position active vers leur position inactive.

5. Appareil selon les revendications 3 ou 4, dans lequel les moyens retardateurs (26) s'étendent à travers les parois (20, 22) de la chambre de traitement (12), et comprennent en outre un moyen d'actionnement (28), agencé à l'extérieur de la chambre de traitement (12) pour actionner les moyens retardateurs (26).

6. Appareil selon l'une quelconque des revendications précédentes, dans lequel la chambre de traitement (12) comporte une double paroi, comprenant une paroi interne (22) et une paroi externe (20), s'étendant le long d'au moins un de ses côtés, et dans lequel les moyens retardateurs (26) s'étendent à travers la paroi interne et la paroi externe (22, 20).

7. Appareil selon l'une quelconque des revendications précédentes, dans lequel les moyens retardateurs (26) comprennent en outre une trajectoire d'écoulement les traversant, des gaz chauds étant introduits dans la chambre de traitement (12) à travers les moyens retardateurs (26), et dans lequel la trajectoire d'écoulement comporte optionnellement au moins une entrée de la trajectoire d'écoulement dans une de ses sections, s'étendant entre les parois interne et externe (22, 20), et au moins une sortie dans une de ses sections, s'étendant dans la chambre de traitement.

8. Appareil selon l'une quelconque des revendications précédentes, dans lequel les moyens retardateurs (26) comprennent chacun au moins un tube creux à travers lequel le gaz chaud peut passer dans la chambre de traitement.

9. Appareil selon l'une quelconque des revendications précédentes, dans lequel les moyens retardateurs (26) peuvent être tournés.

10. Appareil selon la revendication 8, dans lequel les extrémités des crochets inversés (30) sont fléchies dans une direction allant vers ladite chambre de traitement (12), de sorte qu'en service, le gaz chaud émis à partir de celle-ci est dirigé à l'écart de la surface de la chambre de traitement (12).

11. Appareil selon l'une quelconque des revendications précédentes, dans lequel le moyen retardateur (26) comprend un arbre (32) et une tête de retardateur, l'arbre (32) étant connecté de manière pivotante à la tête du retardateur.

12. Procédé de traitement de matériau, par exemple de déchets à revêtement organique et des matériaux organiques englobant de la biomasse, des déchets industriels, des déchets municipaux solides et des boues ; le procédé comprenant les étapes ci-dessous :
placement du matériau devant être traité dans un four (10) comportant une partie rotative comprenant la chambre de traitement ;
chauffage du matériau dans la chambre de traitement (12) en introduisant des gaz chauds dans celle-ci à travers des entrées de gaz dans au moins une paroi de la chambre de traitement ;
rotation du four (10) de sorte à entraîner un culbutement des matériaux qui y sont contenus ; et
retardement du déplacement du matériau dans la chambre de traitement en agençant des moyens retardateurs (26), comprenant plusieurs crochets inversés agencés dans un réseau radial, autour d'un axe central commun, les extrémités des crochets étant espacées de l'axe central commun dans la trajectoire de déplacement des déchets.

13. Procédé selon la revendication 12, comprenant en outre l'étape d'agitation dudit matériau dans la chambre de traitement (12) en déplaçant les moyens retardateurs (26) de la position active (26a), dans laquelle ils débordent dans la chambre de traitement, dans une position inactive (26b), dans laquelle ils débordent dans la chambre de traitement d'une distance inférieure, ladite étape d'agitation comprenant optionnellement un déplacement répété des moyens retardateurs (26) entre leur position active et leur position inactive (26a, 26b).

14. Procédé selon les revendications 12 ou 13, comprenant en outre l'étape d'introduction de gaz chauds dans la chambre de traitement (12), en faisant passer les gaz chauds à travers une trajectoire d'écoulement dans les moyens retardateurs (26).

15. Procédé selon l'une quelconque des revendications 12 à 14, comprenant en outre l'étape d'agitation dudit matériau contenu dans la chambre de traitement (12) en faisant tourner les moyens retardateurs (26).

16. Procédé selon l'une quelconque des revendications 12 à 15, comprenant en outre l'étape de déplacement d'au moins certains des moyens retardateurs (26) dans leur position inactive et de leur maintien dans celle-ci, pendant qu'ils sont recouverts de matériau en cours de traitement, de sorte à piéger au moins une certaine quantité du matériau contre la paroi de la chambre de traitement (12), et en poursuivant optionnellement la rotation du four (10) tout en retenant lesdits au moins certains moyens retardateurs (26) dans leur position inactive de sorte à retenir ledit matériau piégé près des côtés de la chambre de traitement (12) lors de la rotation du four (10).

17. Procédé selon la revendication 12, comprenant l'étape de retardement sélectif du déplacement du matériau dans la chambre de traitement (12) lors de la rotation de la chambre, de sorte à établir une plus grande surface de contact entre les parois de la chambre et le matériau.
